# EUROPÄISCHE PATENTSCHRIFT

(11) **EP 3 859 367 B1**
(45) Veröffentlichungstag und Bekanntmachung des Hinweises auf die Patenterteilung: **25.05.2022**
(21) Anmeldenummer: 20210358.6
(22) Anmeldetag: 27.11.2020
(51) Int. Cl.: G01S 5/04, G01S 5/08, G01S 5/02, G01S 5/14

(54) **SICHERHEITSSYSTEM UND VERFAHREN ZUR LOKALISIERUNG**
SECURITY SYSTEM AND LOCATING METHOD
SYSTÈME DE SÉCURITÉ ET PROCÉDÉ DE LOCALISATION

(30) Priorität: 29.01.2020 DE 102020102155
(43) Veröffentlichungstag der Anmeldung: 04.08.2021
(73) Patentinhaber: SICK AG, 79183 Waldkirch (DE)
(72) Erfinder: Brunner, Fabio, 79100 Freiburg (DE); Hammes, Dr. Markus, 79117 Freiburg (DE); Ams, Mathias, 79211 Denzlingen (DE)

(56) Entgegenhaltungen:
- DE-A1-102013 208 678
- US-A1- 2016 274 586
- US-A1- 2016 363 664

## Beschreibung

Die vorliegende Erfindung betrifft ein Sicherheitssystem gemäß dem Oberbegriff von Anspruch 1 und ein Verfahren zur Lokalisierung eines Objektes gemäß Anspruch 16.

Automatisierte Fahrzeuge (Abkürzung: FTS) sind beispielsweise mit vielen Situationen konfrontiert, in denen eine genaue Positionsinformation erforderlich ist, z.B. vor Beginn einer Sicherheitsaufgabe.

Aktuelle funksignalbasierte Lokalisierungssysteme können Positionsinformationen liefern, deren Genauigkeit in der Regel zwischen +/- 2 Metern und +/- 20 cm liegt, abhängig von der Hochfrequenztechnik und der Konfiguration des Gesamtsystems, aber auch abhängig von Umwelteinflüssen.

Darüber hinaus ist es notwendig, bestimmte Anforderungen zu erfüllen, einschließlich der Zuverlässigkeit des Sensors (Dualität, MTTF, Redundanz) sowie der Diagnoseabdeckung - d.h. der Fähigkeit, den Sensor auf mögliche Fehler im System zu überprüfen. Im Idealfall wird ein auf Triangulation basierendes Lokalisierungssicherheitssystem diese Prüfungen als Teil seiner Routine durchführen.

Eine Lokalisierung kann auf vielfältige Weise erfolgen, z.B. durch das Lesen von Markierungen auf dem Boden (z.B. RFID, Klebeband, Barcode), durch Navigation auf der Grundlage der Reaktion von einer Erfassung der Lichtlaufzeit, die eine Entfernung zu den umliegenden Objekten bereitstellen, die dann mit einer Karte verglichen wird, oder durch Triangulation auf der Grundlage von drei oder mehr Stationen, wie sie mit UWB, GPS und anderen Technologien realisiert wurde.

Die_US 2016 / 0363664 A1 offenbart ein System zum Verfolgen mit einer Bodenabbildungsvorrichtung. Das System umfasst eine Vielzahl von ortsfesten Geräten und mindestens ein verfolgtes Gerät. Die ortsfesten Geräte sind an ortsfesten Orten positioniert und das verfolgte Gerät ist an der Bodenabbildungsvorrichtung anbringbar. Die ortsfesten Geräte und das verfolgte Gerät sind dazu konfiguriert, Signale zu senden und/oder zu empfangen, die für Laufzeitmessungen verwendet werden. Ein Prozessor ist dazu konfiguriert, eine oder mehrere Positionen des verfolgten Geräts relativ zu einem oder mehreren der ortsfesten Geräte basierend auf einer oder mehreren Laufzeitmessungen zwischen dem verfolgten Gerät und einem oder mehreren der ortsfesten Geräte zu bestimmen.

Die US 2016 / 0274586 A1 offenbart Kurzstreckenübertragungen. Kurzstreckenübertragungen werden verwendet, um potenzielle Interaktionen zwischen Lagermitarbeitern und Lagerrobotern in automatisierten Lagern zu identifizieren. Der Roboter kann mit einem oder mehreren Kurzstrecken-Übertragungs-Tags ausgestattet sein, wie beispielsweise Radiofrequenz-Identifikations-(RFID)-Tags, während der Lagerarbeiter mit einem Kurzstrecken-Transmissions-Lesegerät, wie einem RFID-Lesegerät, ausgestattet sein kann. Der Roboter kann einen Lagermitarbeiter erkennen, der sich in Reichweite befindet, wenn die RFID-Tags am Roboter vom RFID-Lesegerät beschrieben werden. Die Lagerroboter und Lagerarbeiter können auch mit einer oder mehreren Kameras ausgestattet werden, um Markierungen im automatisierten Lager zu identifizieren und deren Positionen zu melden. Ein zentraler Kontroll- oder Interaktionsserver kann sicherstellen, dass Lagerroboter und Lagermitarbeiter entsprechend geroutet werden, um Zwischenfälle zu vermeiden.

Die DE 10 2013 208 678 A1 offenbart ein System zur Ausrichtung eines Fahrzeugs, umfassend eine an dem Fahrzeug oder an einer stationären Einrichtung angeordnete Sendeeinrichtung zur Abstrahlung elektromagnetischer Wellen, wobei die Sendeeinrichtung wenigstens eine Sendeeinheit aufweist, eine an der stationären Einrichtung oder in dem Fahrzeug angeordnete Empfangseinrichtung mit wenigstens zwei Empfangseinheiten zur Erfassung der von der Sendeeinrichtung abgestrahlten elektromagnetischen Wellen, einer Auswerteeinrichtung zur Bestimmung der Position des Fahrzeugs relativ zur stationären Einrichtung, und mit einer Einparkassistenzlogik zur Bestimmung von erforderlichen Fahrmanövern des Fahrzeugs, um das Fahrzeug zur stationären Einrichtung, wobei die Auswerteeinrichtung dazu ausgebildet ist, aufgrund der von den wenigstens zwei Empfangseinheiten empfangenen Signale der wenigstens einen Sendeinheit sowohl den Abstand des Fahrzeugs, als auch dessen Orientierung zur stationären Einrichtung zu bestimmen.

Eine Aufgabe der Erfindung besteht darin, ein verbessertes Sicherheitssystem zur Positionserfassung bereitzustellen.

Die Aufgabe wird gemäß Anspruch 1 gelöst durch ein Sicherheitssystem zur Lokalisierung mindestens eines Objektes, mit einer Steuer- und Auswerteeinheit, mit mindestens einem Funkortungssystem, wobei das Funkortungssystem mindestens drei angeordnete Funkstationen aufweist, wobei an dem Objekt mindestens ein Funktransponder angeordnet ist, wobei mittels dem Funkortungssystem Positionsdaten des Objektes ermittelbar sind, wobei die Positionsdaten von den Funkstationen des Funkortungssystems an die Steuer- und Auswerteeinheit übermittelbar sind, wobei mindestens drei Funktransponder an dem Objekt angeordnet sind, wobei alle drei Funktransponder jeweils beabstandet zueinander angeordnet sind und die drei Funktransponder verschiedene Punkte einer Ebene bilden und die Ebene im Raum eindeutig definieren, wobei die Steuer- und Auswerteeinheit ausgebildet ist, die Positionsdaten der Funktransponder zu vergleichen und geprüfte Positionsdaten des Objektes zu bilden, wobei die Steuer- und Auswerteeinheit ausgebildet ist, aus den Positionsdaten der Funktransponder Orientierungsdaten des Objektes zu bilden, wobei ein Aktor ausgebildet ist die Abstände zwischen den Funktranspondern zyklisch zu verändern.

Die Aufgabe wird weiter gemäß Anspruch 16 gelöst durch ein Verfahren zur Lokalisierung mindestens eines Objektes, mit einer Steuer- und Auswerteeinheit, mit mindestens einem Funkortungssystem, wobei das Funkortungssystem mindestens drei angeordnete Funkstationen aufweist, wobei an dem Objekt mindestens ein Funktransponder angeordnet ist, wobei mittels dem Funkortungssystem Positionsdaten des Objektes ermittelt werden, wobei die Positionsdaten von den Funkstationen des Funkortungssystems an die Steuer- und Auswerteeinheit übermittelt werden, wobei mindestens drei Funktransponder an dem Objekt angeordnet sind, wobei alle drei Funktransponder jeweils beabstandet zueinander angeordnet sind und die drei Funktransponder verschiedene Punkte einer Ebene bilden und die Ebene im Raum eindeutig definieren, wobei die Steuer- und Auswerteeinheit die Positionsdaten der Funktransponder vergleicht und geprüfte Positionsdaten des Objektes bildet, wobei die Steuer- und Auswerteeinheit aus den Positionsdaten der Funktransponder Orientierungsdaten des Objektes bildet, wobei ein Aktor ausgebildet ist die Abstände zwischen den Funktranspondern zyklisch zu verändern.

Zwei der Funktransponder liegen beabstandet voneinander auf einer gedachten Geraden. Der dritte Funktransponder liegt außerhalb dieser gedachten Gerade. Die drei Funktransponder bilden also die Ecken eines gedachten Dreiecks und sind somit dreiecksförmig im Raum angeordnet. Dadurch ist eine eindeutige Lage bzw. Orientierung und eine eindeutige Position des Objektes bestimmbar.

Die Funkortung basiert dabei beispielsweise auf einer Triangulation der Funktransponder an dem Objekt. Hierzu sind mindestens drei Funkstationen notwendig die die jeweiligen Funktransponder erfassen können. Dabei ist dem Funkortungssystem der Abstand zwischen den jeweiligen Funkstationen bekannt. Die Funkstationen sind stationär angeordnet.

Es handelt sich vorzugsweise um ein Echtzeitortungssystem oder der englischen Entsprechung RTLS (Real-Time-Locating-System). Dabei sind die Funktransponder an dem Objekt angeordnet. Die Funkstationen erhalten die Funksignale von den Funktranspondern und können so deren Position und damit die Position des Objekts bestimmen.

Dabei werden die Positionsdaten von dem Funkortungssystem, nämlich den Funkstationen an die Steuer- und Auswerteeinheit übermittelt.

Bei dem Funkortungssystem kann es sich um Funkfrequenzen von Funknetzwerken wie WLAN oder Wi-Fi handeln. Beispielsweise wird ein 2,4 GHz oder ein 5 GHz Band bei einer Bandbreite von 20 MHz oder 40 MHz verwendet.

Bei dem Funkortungssystem kann es sich auch um Funkfrequenzen von Funkverbindungen wie Bluetooth handeln. Dabei werden Funkfrequenzen von 2,402 und 2,480 GHz verwendet. Der Vorteil dieser Frequenzen ist, dass diese weltweit zulassungsfrei betrieben werden dürfen. Je nach verwendeter Leistung können dabei Reichweiten von 0 bis 100 m erreicht werden. Die Reichweiten und die zugehörigen maximalen Leistungen sind in Klassen 1 bis 3 eingeteilt.

Die vorgeschlagene Lösung bietet einen einfachen Weg, um eine höhere Zuverlässigkeit für ein Sicherheitssignal zu erreichen, sowie eine Möglichkeit, die Ausrichtung des Fahrzeugs zu kennen und gleichzeitig eine Qualitätsprüfung der empfangenen Signale durchzuführen, mit dem Endziel, eine stabile, zuverlässige und genauere Sicherheitsausgabe zu erreichen. Dies wird durch die Verwendung von zwei oder mehr Lokalisierungs-Tags und Prüfungen zwischen den Ausgängen erreicht.

Bei Kenntnis bzw. Vorliegen der Information der tatsächlichen Relativpositionen der Funktransponder zueinander erlauben gemessene Abstände und Positionen Rückschlüsse über die aktuelle Genauigkeit und Plausibilität der Positionsdaten. Das ist insbesondere für die sicherheitstechnische Verwendung von Vorteil.

In Weiterbildung der Erfindung ist das Objekt ein bewegliches Objekt, eine mobile Maschine oder eine Person.

Bei der bewegbaren Maschine bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um ein automatisch mobilen Roboter (Automated Mobile Robots, AMR), um ein industriemobilen Roboter (Industrial Mobile Robots, IMR) oder um einen Roboter mit bewegbaren Roboterarmen handeln. Die bewegbare Maschine weist somit einen Antrieb auf und kann in verschiedenen Richtungen bewegt werden.

Bei der Person kann es sich beispielsweise um eine Bedienperson oder Wartungsperson handeln. Die Funktransponder sind beispielsweise an der Kleidung der Person angeordnet. Dabei kann es sich beispielsweise um eine Weste handeln an der die Funktransponder fest fixiert sind. Die Funktransponder sind beispielsweise an den Schultern und im Brust- oder Rückenbereich angeordnet. Jedoch können die Funktransponder auch an anderen Stellen der Person angeordnet sein.

In Weiterbildung der Erfindung sind die Abstände zwischen den Funktranspondern der Steuer- und Auswerteeinheit bekannt. Dadurch ist es möglich bestimmte Objekte mit bestimmten Abständen der Funktransponder bestimmten gespeicherten Objekten zu zuordnen und diese zu erkennen. So können beispielsweise bestimmte Objekte mit individuellen Abständen der Funktransponder identifiziert werden. Beispielsweise sind bestimmte Objektklassen, wie bestimmte verschiedene Fahrzeuge, verschiedene Personen usw. aufgrund der individuellen Anordnung der Funktransponder identifizierbar.

In Weiterbildung der Erfindung sind die Abstände zwischen den Funktranspondern in einem Speicher der Steuer- und Auswerteeinheit abgespeichert. Dadurch ist es möglich verschiedene Objekte mit individuellen Abständen der Funktransponder einzulernen und diese abzuspeichern, so dass das Sicherheitssystem abgespeicherte Objekte identifizieren kann und von nicht abgespeicherten Objekten unterscheiden kann.

Gemäß der Erfindung ist mindestens ein Aktor ausgebildet die Abstände zwischen den Funktranspondern zyklisch zu verändern. Dadurch ändert sich der Abstand von mindestens zwei Funktranspondern zyklisch, wodurch die Positionserfassung der Funktransponder dynamisiert wird und dadurch testbar wird, wodurch Fehler in der Positionserfassung und in der Erfassung der Orientierung vermieden werden.

Die Abstände der Funktransponder sind damit veränderlich, wobei auch hier der veränderliche Abstand bekannt ist. Dabei kann der Abstand beispielsweise gemessen, insbesondere zyklisch gemessen werden.

Bei dem Aktor kann es sich beispielsweise um einen Aktor mit einer Linearbewegung oder einer Rotationsbewegung handeln, wobei die Linearbewegung oder Rotationsbewegung zyklisch mit einer Periodendauer erfolgt.

Bei dem Aktor kann es sich beispielsweise um einen elektrischen Antrieb, um einen pneumatischen Antrieb oder um einen hydraulischen Antrieb handeln.

In Weiterbildung der Erfindung zeigen die Funkstationen jeweils in unterschiedliche Richtungen. Beispielsweise sind die Funkstationen ringförmig angeordnet und die Richtung ist auf einen zentralen gemeinsamen Punkt ausgerichtet. Beispielsweise können mindestens vier Funkstationen in den Ecken eines Raumes angeordnet sein und jeweils in die Raummitte ausgerichtet sein.

In Weiterbildung sind die Richtungen der Funkstationen durch Aktoren zyklisch veränderlich. Dadurch kann ein größerer Raumbereich erfasst werden, ohne zusätzliche Funkstationen anordnen zu müssen. Die Richtungen werden beispielsweise in einem bestimmten Winkelbereich, beispielsweise mindestens 30°, mindestens 60°, oder mindestens 90° zyklisch verändert.

Bei den Aktoren kann es sich beispielsweise um elektromagnetische Aktoren oder elektrische Aktoren handeln.

In Weiterbildung der Erfindung ist die Steuer- und Auswerteeinheit ausgebildet jeweils eine Position der Funktransponder zu unterschiedlichen Zeitpunkten zu ermitteln und daraus eine Geschwindigkeit, eine Beschleunigung und/oder eine Bewegungsrichtung der Funktransponder zu bestimmen.

Dadurch kann beispielsweise eine Route eines Objektes, einer bewegbaren Maschine oder eines Fahrzeuges verfolgt werden und beispielsweise abhängig von der Bewegungsrichtung oder der Bewegungsgeschwindigkeit eine Aktion ausgelöst werden. Beispielsweise kann das Objekt zielgenau positioniert werden.

In Weiterbildung der Erfindung weisen die Funktransponder Uhren auf, wobei die Funkstationen ebenfalls Uhren aufweisen, wobei die Funkstationen ausgebildet sind die Uhrzeiten der Uhren der Funktransponder auszulesen und zu beschreiben und die Funkstationen ausgebildet sind die Uhrzeiten der Funktransponder zu synchronisieren und die Funkstationen ausgebildet sind die Uhrzeiten der Funktransponder mit den Uhrzeiten der Funkstationen zu vergleichen.

Dadurch ist eine präzisiere Positionsbestimmung möglich, welche durch die Synchronisation auch dauerhaft präzise durchgeführt werden kann, insbesondere bei sich bewegenden Objekten.

In Weiterbildung der Erfindung sind mindestens vier, mindestens sechs oder mindestens acht Funktransponder an dem Objekt angeordnet, wobei jeweils zwei Transponder auf jeweils einer Geraden liegen, wobei die Geraden jeweils senkrecht zueinander sind.

Dadurch sind Funktransponder jeweils paarweise angeordnet, wobei die jeweiligen Paare jeweils eine unterschiedliche Orientierung aufweisen. Dadurch ist eine Orientierungsbestimmung aus jeder Richtung eindeutig. Weiter kann auch im Kreuzungspunkt der Geraden ein Funktransponder angeordnet sein, so dass ein einzelner Funktransponder einen Mittelpunkt bzw. einen zentralen Positionspunkt bildet, welcher als Referenzposition herangezogen werden kann.

In Weiterbildung der Erfindung weist die bewegbare Maschine mindestens einen Encoder auf, welcher eine Bewegung der bewegbaren Maschine erfasst, wobei der Encoder an die Steuer- und Auswerteeinheit angeschlossen ist und die Steuer- und Auswerteeinheit ausgebildet ist die Bewegungsinformation der Encoder auszuwerten.

Dadurch liegen Bewegungsinformationen vor um beispielsweise die Bewegungsinformation der Funktransponder zu testen. So kann von einer gültigen Bewegung ausgegangen werden, wenn der Encoder und die Funktransponder Bewegungsinformation mit einer gleichen Richtung aufweisen.

In Weiterbildung der Erfindung sind mittels dem Funkortungssystem Klassifizierungsdaten des Objektes ermittelbar, wobei die Klassifizierungsdaten von der Funkstation an die Steuer- und Auswerteeinheit übermittelbar sind. Dadurch erfolgt eine Identifizierung der Objekte.

In dem Funktransponder sind beispielsweise die Klassifizierungsdaten des Objektes gespeichert. Beispielsweise beschreiben die Klassifizierungsdaten die Art des Objektes und deren Eigenschaften. So können die Klassifizierungsdaten beispielsweise Funktionseigenschaften oder Materialeigenschaften des Objektes beschreiben.

Die Funkstationen können somit die Klassifizierungsdaten der Funktransponder auslesen und an die Steuer- und Auswerteeinheit übermitteln.

In Weiterbildung der Erfindung ist das Funkortungssystem ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20% der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

Vorzugsweise sind eine Vielzahl, beispielsweise mehr als drei Funkstationen angeordnet, welche mindestens einen Teil des Bewegungsbereichs der Person oder des Objektes überwachen.

In Weiterbildung der Erfindung erfolgt aufgrund der geprüften Positionsdaten mittels der Steuer- und Auswerteeinheit eine Veränderung der Sicherheitsfunktion des Sicherheitssystems.

Basierend auf Positionsdaten mittels der Steuer- und Auswerteeinheit erfolgt eine Veränderung der Sicherheitsfunktion des Sicherheitssystems.

Wenn eine vorbestimmte Position erkannt ist, welche beispielsweise abgespeichert ist, kann die Steuer- und Auswerteeinheit auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

In Weiterbildung der Erfindung werden mittels der Steuer- und Auswerteeinheit geprüften Positionsdaten mit gespeicherten Positionsdaten eines Sicherheitspunktes auf Übereinstimmung geprüft und bei einer Übereinstimmung erfolgt eine Veränderung der Sicherheitsfunktion des Sicherheitssystems.

Der Sicherheitspunkt (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem bzw. eine Schutzeinrichtung oder eine Sicherheitsfunktion der bewegbaren Maschine anzupassen, um sowohl einen Personenschutz wie auch eine Maschinenverfügbarkeit zu gewährleisten. Bei dem Sicherheitspunkt handelt es sich als synonyme Bezeichnung um einen Sicherheitsort, also keinen singulären Punkt.

In Weiterbildung der Erfindung weist das Sicherheitssystem eine Karte oder ein Kartenmodel auf, wobei der mindestens ein Sicherheitspunkt in der Karte oder dem Kartenmodel eingetragen ist und eine Navigation der bewegbaren Maschine in der Karte oder dem Kartenmodel erfolgt.

Die aktuelle Position und/oder Lage der bewegbaren Maschine wird in der Steuer- und Auswerteeinheit aufgrund erfasster Umgebungskonturen kontinuierlich verarbeitet und die Karte oder das Kartenmodell aktualisiert. Die Karte weist ein Koordinatensystem auf. Diese Art der Positionsbestimmung wird als Simultaneous-Localisation-and-Mapping (kurz: SLAM) Methode bezeichnet. Dabei ist mindestens eine Position und eine zugehörige Orientierung in der Karte bekannt, bzw. eine Ursprungsposition und Ursprungsorientierung in der Karte bekannt. Erkannte Positionen und/oder Konturen werden in die Karte fortlaufend eingetragen, wodurch die Karte erweitert wird bzw. Veränderungen von beispielsweise Objekten und/oder Fahrwegen in die Karte eingetragen werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 3: jeweils ein erfindungsgemäßes Sicherheitssystem zur Lokalisie-rung eines Objektes;
- Figur 4 bis Figur 6: jeweils mindestens eine paarweise Anordnung von Funktranspon-dern;
- Figur 7: eine Darstellung von Funkstationen und Funktransponder in einem kartesi-schen Koordinatensystem;
- Figur 8: jeweils eine Vielzahl von Positionen eines Funktransponders.

In den nachfolgenden Figuren sind identische Teile mit identischen Bezugszeichen versehen.

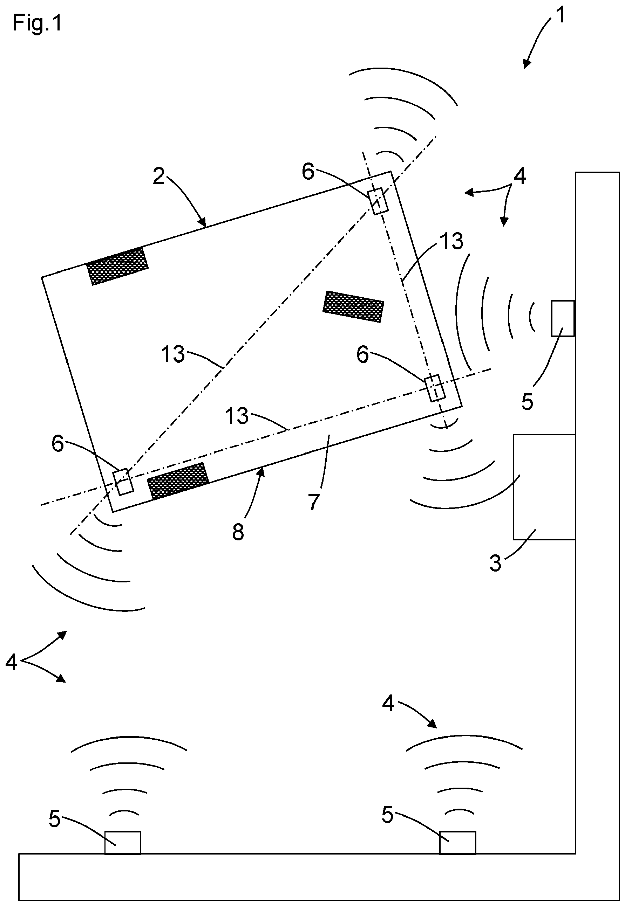

Figur 1 zeigt ein Sicherheitssystem 1 zur Lokalisierung mindestens eines Objektes 2, mit einer Steuer- und Auswerteeinheit 3, mit mindestens einem Funkortungssystem 4, wobei das Funkortungssystem 4 mindestens drei angeordnete Funkstationen 5 aufweist, wobei an dem Objekt 2 mindestens ein Funktransponder 6 angeordnet ist, wobei mittels dem Funkortungssystem 4 Positionsdaten des Objektes 2 ermittelbar sind, wobei die Positionsdaten von der Funkstation 5 des Funkortungssystems 4 an die Steuer- und Auswerteeinheit 3 übermittelbar sind, mindestens drei Funktransponder 6 an dem Objekt 2 angeordnet sind, wobei alle drei Funktransponder 6 jeweils beabstandet zueinander angeordnet sind und die drei Funktransponder 6 verschiedene Punkte einer Ebene bilden und die Ebene im Raum eindeutig definieren, wobei die Steuer- und Auswerteeinheit 3 ausgebildet ist, die Positionsdaten der Funktransponder 6 zu vergleichen und geprüfte Positionsdaten des Objektes 2 zu bilden, wobei die Steuer- und Auswerteeinheit 3 ausgebildet ist, aus den Positionsdaten der Funktransponder 6 Orientierungsdaten des Objektes 2 zu bilden.

Zwei der Funktransponder 6 liegen beabstandet voneinander auf einer gedachten Geraden 13. Der dritte Funktransponder liegt außerhalb dieser gedachten Gerade 13. Die drei Funktransponder 6 bilden also die Ecken eines gedachten Dreiecks und sind somit dreiecksförmig im Raum angeordnet. Dadurch ist eine eindeutige Lage bzw. Orientierung und eine eindeutige Position des Objektes 2 bestimmbar.

Die Funkortung basiert dabei beispielsweise jeweils auf einer Triangulation der Funktransponder 6 an dem Objekt 2. Hierzu sind mindestens drei Funkstationen 5 notwendig die die jeweiligen Funktransponder 6 erfassen können. Dabei ist dem Funkortungssystem 4 der Abstand zwischen den jeweiligen Funkstationen 5 bekannt. Die Funkstationen 5 sind stationär angeordnet.

Es handelt es sich vorzugsweise um ein Echtzeitortungssystem oder der englischen Entsprechung RTLS (Real-Time-Locating-System). Dabei sind die Funktransponder 6 an dem Objekt 2 angeordnet. Die Funkstationen 5 erhalten die Funksignale von den Funktranspondern 6 und können so deren Position und damit die Position des Objekts 2 bestimmen.

Dabei werden die Positionsdaten von dem Funkortungssystem 4, nämlich den Funkstationen 5 an die Steuer- und Auswerteeinheit 3 übermittelt.

Gemäß Figur 1 ist das Objekt 2 ein bewegliches Objekt 7 insbesondere eine mobile oder bewegbare Maschine 8. Die bewegbare Maschine 8 weist somit einen Antrieb auf und kann in verschiedenen Richtungen bewegt werden.

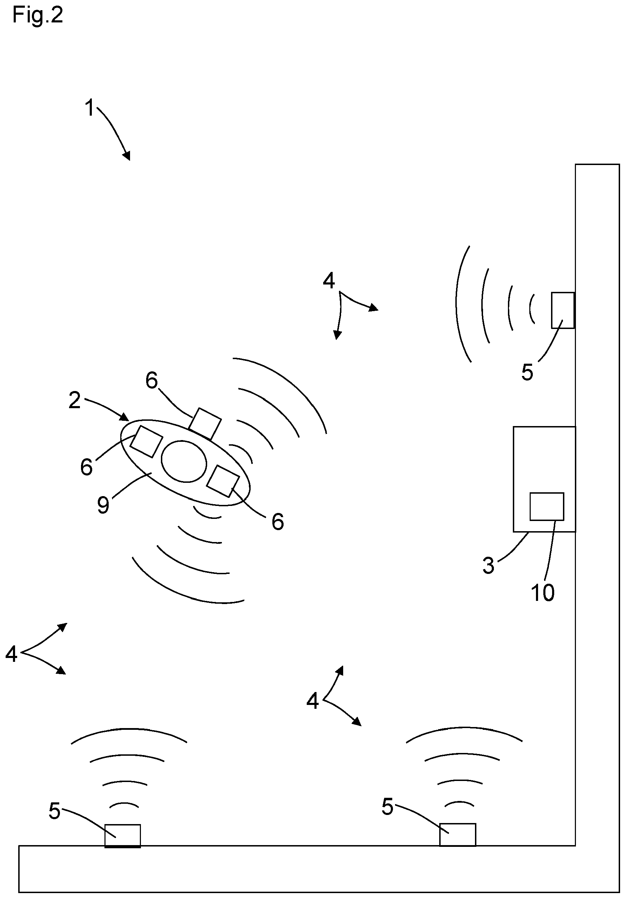

Gemäß Figur 2 ist das Objekt 2 eine Person 9. Bei der Person 9 kann es sich beispielsweise um eine Bedienperson oder Wartungsperson handeln. Die Funktransponder 6 sind beispielsweise an der Kleidung der Person 9 angeordnet. Dabei kann es sich beispielsweise um eine Weste handeln an der die Funktransponder 6 fest fixiert sind. Die Funktransponder 6 sind beispielsweise an den Schultern und im Brust- oder Rückenbereich angeordnet. Jedoch können die Funktransponder 6 auch an anderen Stellen der Person 9 angeordnet sein.

Gemäß Figur 2 sind die Abstände und/oder die Lage zwischen den Funktranspondern 6 der Steuer- und Auswerteeinheit 3 optional bekannt. Dadurch ist es möglich bestimmte Objekte 2 mit bestimmten Abständen der Funktransponder 6 bestimmten gespeicherten Objekten 2 zu zuordnen und diese zu erkennen. So können beispielsweise bestimmte Objekte 2 mit individuellen Abständen der Funktransponder 6 identifiziert werden. Beispielsweise sind bestimmte Objektklassen, wie bestimmte verschiedene Fahrzeuge, verschiedene Personen 9 usw. aufgrund der individuellen Anordnung der Funktransponder 6 identifizierbar.

Gemäß Figur 2 sind die Abstände zwischen den Funktranspondern 6 in einem Speicher 10 der Steuer- und Auswerteeinheit 3 abgespeichert. Dadurch ist es möglich verschiedene Objekte 2 mit individuellen Abständen der Funktransponder 6 einzulernen und diese abzuspeichern, so dass das Sicherheitssystem 1 abgespeicherte Objekte 2 identifizieren kann und von nicht abgespeicherten Objekten 2 unterscheiden kann.

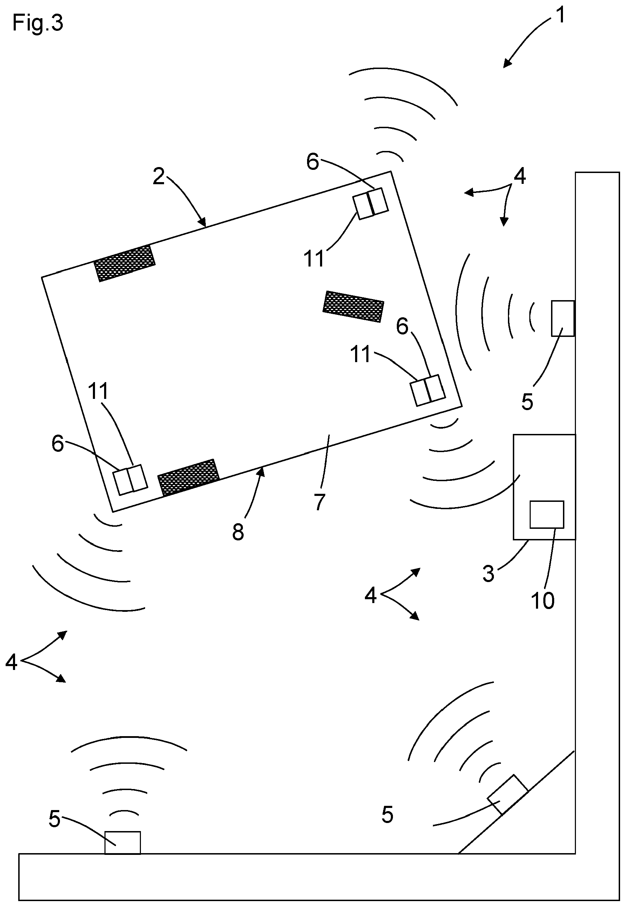

Gemäß Figur 3 ist mindestens ein Aktor 11 ausgebildet die Abstände zwischen den Funktranspondern zyklisch zu verändern. Dadurch ändert sich der Abstand von mindestens zwei Funktranspondern 6 zyklisch, wodurch die Positionserfassung der Funktransponder 6 dynamisiert wird und dadurch testbar wird, wodurch Fehler in der Positionserfassung und in der Erfassung der Orientierung vermieden werden.

Bei dem Aktor 11 kann es sich beispielsweise um einen Aktor 11 mit einer Linearbewegung oder einer Rotationsbewegung handeln, wobei die Linearbewegung oder Rotationsbewegung zyklisch mit einer Periodendauer erfolgt.

Bei dem Aktor 11 kann es sich beispielsweise um einen elektrischen Antrieb, um einen pneumatischen Antrieb oder um einen hydraulischen Antrieb handeln.

Gemäß Figur 3 zeigen die Funkstationen 5 jeweils in unterschiedliche Richtungen. Beispielsweise sind die Funkstationen 5 an verschiedenen Wänden angeordnet und die Richtung ist auf einen zentralen gemeinsamen Bereich ausgerichtet. Beispielsweise können mindestens vier Funkstationen 5 in den Ecken eines Raumes angeordnet sein und jeweils in die Raummitte ausgerichtet sein.

Gemäß Figur 3 sind die Richtungen der Funkstationen 5 durch Aktoren 11 zyklisch veränderlich. Dadurch kann ein größerer Raumbereich erfasst werden, ohne zusätzliche Funkstationen 5 anordnen zu müssen. Die Richtungen werden beispielsweise in einem bestimmten Winkelbereich, beispielsweise mindestens 30°, mindestens 60°, oder mindestens 90° zyklisch verändert.

Bei den Aktoren 11 kann es sich beispielsweise um elektromagnetische Aktoren oder elektrische Aktoren handeln.

Gemäß Figur 3 ist die Steuer- und Auswerteeinheit 3 ausgebildet, jeweils eine Position der Funktransponder 6 zu unterschiedlichen Zeitpunkten zu ermitteln und daraus eine Geschwindigkeit, eine Beschleunigung und/oder eine Bewegungsrichtung der Funktransponder 6 zu bestimmen.

Dadurch kann beispielsweise eine Route eines Objektes 2, einer bewegbaren Maschine 8 oder eines Fahrzeuges verfolgt werden und beispielsweise abhängig von der Bewegungsrichtung oder der Bewegungsgeschwindigkeit eine Aktion ausgelöst werden. Beispielsweise kann das Objekt 2 zielgenau positioniert werden.

Gemäß Figur 3 weisen die Funktransponder Uhren auf, wobei die Funkstationen 5 ebenfalls Uhren aufweisen, wobei die Funkstationen 5 ausgebildet sind die Uhrzeiten der Uhren der Funktransponder 6 auszulesen und zu beschreiben und die Funkstationen 5 ausgebildet sind die Uhrzeiten der Funktransponder 6 zu synchronisieren und die Funkstationen 5 ausgebildet sind die Uhrzeiten der Funktransponder 6 mit den Uhrzeiten der Funkstationen 5 zu vergleichen.

Dadurch ist eine präzisere Positionsbestimmung möglich, welche durch die Synchronisation auch dauerhaft präzise durchgeführt werden kann, insbesondere bei sich bewegenden Objekten 2.

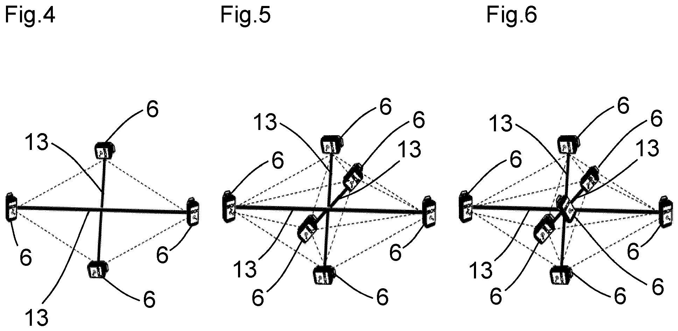

Gemäß Figur 4 sind mindestens vier Funktransponder 6 an dem Objekt 2 angeordnet, wobei jeweils zwei Funktransponder 6 auf jeweils einer Geraden 13 bzw. Achse liegen, wobei die Geraden 13 jeweils senkrecht zueinander sind.

Gemäß Figur 5 sind mindestens sechs Funktransponder 6 an dem Objekt 2 angeordnet, wobei jeweils zwei Funktransponder 6 auf jeweils einer Geraden 13 bzw. Achse liegen, wobei die Geraden 13 jeweils senkrecht zueinander sind.

Gemäß Figur 6 sind mindestens acht Funktransponder 6 an dem Objekt 2 angeordnet, wobei jeweils zwei Funktransponder 6 auf jeweils einer Geraden 13 liegen, wobei die Geraden 13 jeweils senkrecht zueinander sind. Gemäß Figur 6 ist optional auch im Kreuzungspunkt der Geraden 13 ein Funktransponder 6 angeordnet sein, so dass ein einzelner Funktransponder 6 einen Mittelpunkt bzw. einen zentralen Positionspunkt bildet, welcher als Referenzposition herangezogen werden kann.

Gemäß Figur 3 sind mittels dem Funkortungssystem Klassifizierungsdaten des Objektes ermittelbar, wobei die Klassifizierungsdaten von der Funkstation 5 an die Steuer- und Auswerteeinheit 3 übermittelbar sind. Dadurch erfolgt eine Identifizierung der Objekte 2.

In dem Funktransponder 6 sind beispielsweise die Klassifizierungsdaten des Objektes 2 gespeichert. Beispielsweise beschreiben die Klassifizierungsdaten die Art des Objektes 2 und deren Eigenschaften. So können die Klassifizierungsdaten beispielsweise Funktionseigenschaften oder Materialeigenschaften des Objektes 2 beschreiben.

Die Funkstationen 5 können somit die Klassifizierungsdaten der Funktransponder 6 auslesen und an die Steuer- und Auswerteeinheit 3 übermitteln.

Gemäß Figur 3 ist das Funkortungssystem 4 ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt. Die Reichweite eines derartigen Funkortungssystems 4 beträgt beispielsweise 0 bis 50 m. Dabei wird die kurze zeitliche Dauer der Funkpulse für die Ortung benutzt.

Vorzugsweise sind eine Vielzahl, beispielsweise mehr als drei Funkstationen 5 angeordnet, welche mindestens einen Teil des Bewegungsbereichs der Person oder des Objektes 2 überwachen.

Gemäß Figur 3 erfolgt aufgrund der geprüften Positionsdaten mittels der Steuer- und Auswerteeinheit 3 eine Veränderung der Sicherheitsfunktion des Sicherheitssystems 1.

Basierend auf Positionsdaten mittels der Steuer- und Auswerteeinheit 3 erfolgt eine Veränderung der Sicherheitsfunktion des Sicherheitssystems 1.

Wenn eine vorbestimmte Position erkannt ist, welche beispielsweise abgespeichert ist, kann die Steuer- und Auswerteeinheit 3 auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

Gemäß Figur 3 werden mittels der Steuer- und Auswerteeinheit 3 geprüften Positionsdaten mit gespeicherten Positionsdaten eines Sicherheitspunktes auf Übereinstimmung geprüft und bei einer Übereinstimmung erfolgt eine Veränderung der Sicherheitsfunktion des Sicherheitssystems.

Der Sicherheitspunkt (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem 1 bzw. eine Schutzeinrichtung oder eine Sicherheitsfunktion der bewegbaren Maschine 8 anzupassen, um sowohl einen Personenschutz wie auch eine Maschinenverfügbarkeit zu gewährleisten. Bei dem Sicherheitspunkt handelt es sich als synonyme Bezeichnung um einen Sicherheitsort, also keinen singulären Punkt.

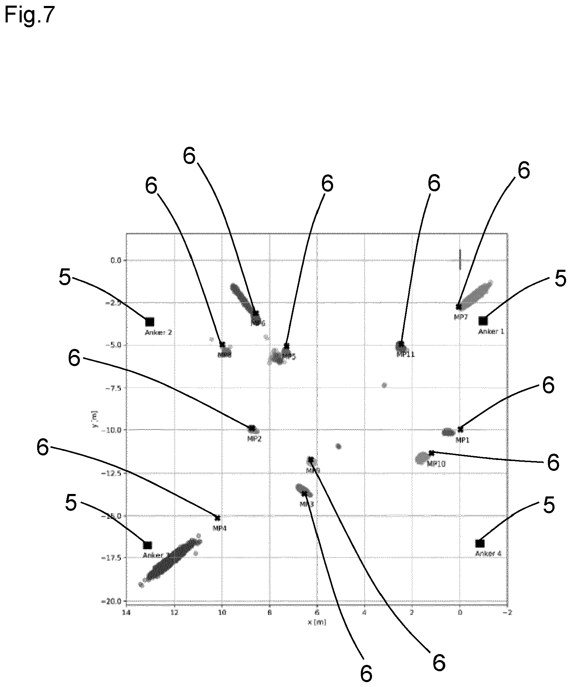

In Figur 7 sind vier Funkstationen 5 in einem kartesischen Koordinatensystem angeordnet. Die erfassten Positionen der Funktransponder 6 sind dargestellt. Dabei ist eine Genauigkeit der Erfassung abhängig von der Position des Funktransponders 6 zu den Funkstationen 5. Zentral zwischen den Funkstationen 5 angeordnete Funktransponder 6 werden mit einer höheren Positionsgenauigkeit erfasst als Funktransponder 6 die in der Nähe einer Funkstation 5 angeordnet sind.

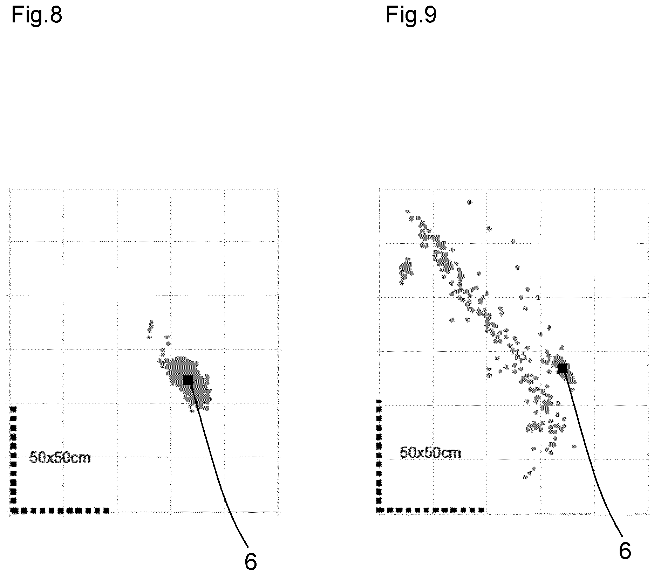

Figur 8 zeigt eine Positionsbestimmung eines einzelnen Funktransponders 6 durch eine Mehrfachmessung. Die einzelnen gemessenen Positionspunkte werden beispielsweise gemittelt.

Figur 9 zeigt eine Positionsbestimmung eines einzelnen Funktransponders 6 gemäß Figur 8 ebenfalls durch eine Mehrfachmessung. Hier werden die gemessenen Positionspunkte jedoch durch eine anwesende Person und deren physischen Anteil von Wasser verfälscht. Dennoch kann die Position durch eine Mehrfachmessung und Mittelung der Messwerte festgestellt werden.

### Bezugszeichen:

- 1: Sicherheitssystem
- 2: Objekt
- 3: Steuer- und Auswerteeinheit
- 4: Funkortungssystem
- 5: Funkstationen
- 6: Funktransponder
- 7: bewegliches Objekt
- 8: bewegbare Maschine/mobile Maschine
- 9: Person
- 10: Speicher
- 11: Aktoren
- 13: Achse/Gerade

## Patentansprüche

1. Sicherheitssystem (1) zur Lokalisierung mindestens eines Objektes (2), mit einer Steuer- und Auswerteeinheit (3), mit mindestens einem Funkortungssystem (4), wobei
das Funkortungssystem (4) mindestens drei angeordnete Funkstationen (5) aufweist,
wobei an dem Objekt (2) mindestens ein Funktransponder (6) angeordnet ist, wobei mittels dem Funkortungssystem (4) Positionsdaten des Objektes (2) ermittelbar sind,
wobei die Positionsdaten von den Funkstationen (5) des Funkortungssystems (4) an die Steuer- und Auswerteeinheit (3) übermittelbar sind,
wobei
mindestens drei Funktransponder (6) an dem Objekt (2) angeordnet sind, wobei alle drei Funktransponder (6) jeweils beabstandet zueinander angeordnet sind und die drei Funktransponder (6) verschiedene Punkte einer Ebene bilden und die Ebene im Raum eindeutig definieren,
wobei die Steuer- und Auswerteeinheit (3) ausgebildet ist, die Positionsdaten der Funktransponder (6) zu vergleichen und geprüfte Positionsdaten des Objektes (2) zu bilden,
wobei die Steuer- und Auswerteeinheit (3) ausgebildet ist, aus den Positionsdaten der Funktransponder (6) Orientierungsdaten des Objektes (2) zu bilden, **dadurch gekennzeichnet, dass** ein Aktor (11) ausgebildet ist die Abstände zwischen den Funktranspondern (6) zyklisch zu verändern.

2. Sicherheitssystem (1) nach mindestens einem der vorhergehenden Ansprüche, **dadurch gekennzeichnet, dass** das Objekt (2) ein bewegliches Objekt (7), eine mobile Maschine (8) oder eine Person (9) ist.

3. Sicherheitssystem (1) nach mindestens einem der vorhergehenden Ansprüche, **dadurch gekennzeichnet, dass** die Abstände zwischen den Funktranspondern (6) der Steuer- und Auswerteeinheit (3) bekannt sind.

4. Sicherheitssystem (1) nach mindestens einem der vorhergehenden Ansprüche, **dadurch gekennzeichnet, dass** die Abstände zwischen den Funktranspondern (6) in einem Speicher (10) der Steuer- und Auswerteeinheit (3) abgespeichert sind.

5. Sicherheitssystem (1) nach mindestens einem der vorhergehenden Ansprüche, **dadurch gekennzeichnet, dass** die Funkstationen (5) jeweils in unterschiedliche Richtungen zeigen.

6. Sicherheitssystem (1) nach mindestens einem der vorhergehenden Ansprüche, **dadurch gekennzeichnet, dass** Richtungen der Funkstationen (5) durch Aktoren (11) zyklisch veränderlich sind.

7. Sicherheitssystem (1) nach mindestens einem der vorhergehenden Ansprüche, **dadurch gekennzeichnet, dass** die Steuer- und Auswerteeinheit (3) ausgebildet ist jeweils eine Position der Funktransponder (6) zu unterschiedlichen Zeitpunkten zu ermitteln und daraus eine Geschwindigkeit, eine Beschleunigung und/oder eine Bewegungsrichtung der Funktransponder (6) zu bestimmen.

8. Sicherheitssystem (1) nach mindestens einem der vorhergehenden Ansprüche, **dadurch gekennzeichnet, dass** die Funktransponder (6) Uhren aufweisen, wobei die Funkstationen (5) ebenfalls Uhren aufweisen, wobei die Funkstationen (5) ausgebildet sind die Uhrzeiten der Uhren der Funktransponder (6) auszulesen und zu beschreiben und die Funkstationen (5) ausgebildet sind die Uhrzeiten der Funktransponder (6) zu synchronisieren und die Funkstationen (5) ausgebildet sind die Uhrzeiten der Funktransponder (6) mit den Uhrzeiten der Funkstationen (5) zu vergleichen.

9. Sicherheitssystem (1) nach mindestens einem der vorhergehenden Ansprüche, **dadurch gekennzeichnet, dass** mindestens vier, mindestens sechs oder mindestens acht Funktransponder (6) an dem Objekt (2) angeordnet sind, wobei jeweils zwei Funktransponder (6) auf jeweils einer Geraden liegen, wobei die Geraden jeweils senkrecht zueinander sind.

10. Sicherheitssystem (1) nach mindestens einem der vorhergehenden Ansprüche, **dadurch gekennzeichnet, dass** eine bewegbare Maschine (7) einen Encoder aufweist, welche eine Bewegung der bewegbaren Maschine (7) erfassen, wobei der Encoder an die Steuer- und Auswerteeinheit (3) angeschlossen ist und die Steuer- und Auswerteeinheit (3) ausgebildet ist die Bewegungsinformation der Encoder auszuwerten.

11. Sicherheitssystem (1) nach mindestens einem der vorhergehenden Ansprüche, **dadurch gekennzeichnet, dass** mittels dem Funkortungssystem (4) Klassifizierungsdaten des Objektes (2) ermittelbar sind, wobei die Klassifizierungsdaten von der Funkstation (5) an die Steuer- und Auswerteeinheit (3) übermittelbar sind.

12. Sicherheitssystem (1) nach mindestens einem der vorhergehenden Ansprüche, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

13. Sicherheitssystem (1) nach mindestens einem der vorhergehenden Ansprüche, **dadurch gekennzeichnet, dass** aufgrund der geprüften Positionsdaten mittels der Steuer- und Auswerteeinheit (3) eine Veränderung einer Sicherheitsfunktion des Sicherheitssystems (1) erfolgt.

14. Sicherheitssystem (1) nach mindestens einem der vorhergehenden Ansprüche, **dadurch gekennzeichnet, dass** mittels der Steuer- und Auswerteeinheit (3) geprüften Positionsdaten mit gespeicherten Positionsdaten eines Sicherheitspunktes auf Übereinstimmung geprüft werden und bei einer Übereinstimmung eine Veränderung einer Sicherheitsfunktion des Sicherheitssystems (1) erfolgt.

15. Sicherheitssystem (1) nach mindestens einem der vorhergehenden Ansprüche, **dadurch gekennzeichnet, dass** das Sicherheitssystem (1) eine Karte oder ein Kartenmodel aufweist, wobei der mindestens ein Sicherheitspunkt in der Karte oder dem Kartenmodel eingetragen ist und eine Navigation einer bewegbaren Maschine in der Karte oder dem Kartenmodel erfolgt.

16. Verfahren zur Lokalisierung mindestens eines Objektes (2), mit einer Steuer-und Auswerteeinheit (3), mit mindestens einem Funkortungssystem (4), wobei das Funkortungssystem (4) mindestens drei angeordnete Funkstationen (5) aufweist,
wobei an dem Objekt (2) mindestens ein Funktransponder (6) angeordnet ist, wobei mittels dem Funkortungssystem (4) Positionsdaten des Objektes (2) ermittelt werden,
wobei die Positionsdaten von den Funkstationen (5) des Funkortungssystems (4) an die Steuer- und Auswerteeinheit (3) übermittelt werden,
wobei
mindestens drei Funktransponder (6) an dem Objekt (2) angeordnet sind, wobei alle drei Funktransponder (6) jeweils beabstandet zueinander angeordnet sind und die drei Funktransponder (6) verschiedene Punkte einer Ebene bilden und die Ebene im Raum eindeutig definieren,
wobei die Steuer- und Auswerteeinheit (3) die Positionsdaten der Funktransponder (6) vergleicht und geprüfte Positionsdaten des Objektes (2) bildet, wobei die Steuer- und Auswerteeinheit (3) aus den Positionsdaten der Funktransponder (6) Orientierungsdaten des Objektes (2) bildet, **dadurch gekennzeichnet, dass** ein Aktor (11) ausgebildet ist die Abstände zwischen den Funktranspondern (6) zyklisch zu verändern.

## Claims

1. A safety system (1) for localizing at least one object (2) having a control and evaluation unit (3), having at least one radio location system (4), wherein
the radio location system (4) has at least three arranged radio stations (5);
wherein at least one radio transponder (6) is arranged at the object (2); wherein position data of the object (2) can be determined by means of the radio location system (4);
wherein the position data can be transmitted from the radio stations (5) of the radio location system (4) to the control and evaluation unit (3), wherein
at least three radio transponders (6) are arranged at the object (2), with all three radio transponders (6) each being arranged spaced apart from one another and with the three radio transponders (6) forming different points of a plane and defining the plane unambiguously in space;
with the control and evaluation unit (3) being configured to compare the position data of the radio transponders (6) and to form checked position data of the object (2); and
wherein the control and evaluation unit (3) is configured to form orientation data of the object (2) from the position data of the radio transponders (6),
**characterized in that** an actuator (11) is configured to cyclically vary the distances between the radio transponders (6).

2. A safety system (1) in accordance with at least one of the preceding claims, **characterized in that** the object (2) is a movable object (7), a mobile machine (8) or a person (9).

3. A safety system (1) in accordance with at least one of the preceding claims, **characterized in that** the distances between the radio transponders (6) are known to the control and evaluation unit (3).

4. A safety system (1) in accordance with at least one of the preceding claims, **characterized in that** the distances between the radio transponders (6) are stored in a memory (10) of the control and evaluation unit (3).

5. A safety system (1) in accordance with at least one of the preceding claims, **characterized in that** the radio stations (5) face in respective different directions.

6. A safety system (1) in accordance with at least one of the preceding claims, **characterized in that** the directions of the radio stations (5) are cyclically variable by actuators (11).

7. A safety system (1) in accordance with at least one of the preceding claims, **characterized in that** the control and evaluation unit (3) is configured to respectively determine a position of the radio transponders (6) at different points in time and to determine a speed, an acceleration, and/or a movement direction of the radio transponders (6) from it.

8. A safety system (1) in accordance with at least one of the preceding claims, **characterized in that** the radio transponders (6) have clocks, with the radio stations (5) likewise having clocks, with the radio stations (5) being configured to read and describe the times of the clocks of the radio transponders (6) and with the radio stations (5) being configured to synchronize the times of the radio transponders (6), and with the radio stations (5) being configured to compare the times of the radio transponders (6) with the times of the radio stations (5).

9. A safety system (1) in accordance with at least one of the preceding claims, **characterized in that** at least four, at least six, or at least eight radio transponders (6) are arranged at the object (2), with two respective transponders (6) being disposed on a respective one straight line, with the straight lines each being perpendicular to one another.

10. A safety system (1) in accordance with at least one of the preceding claims, **characterized in that** a movable machine (7) has an encoder that detects a movement of the movable machine (7), with the encoder being connected to the control and evaluation unit (3) and the control and evaluation unit (3) being configured to evaluate the movement information of the encoders.

11. A safety system (1) in accordance with at least one of the preceding claims, **characterized in that** classification data of the object (2) can be determined by means of the radio location system (4), with the classification data being able to be transmitted from the radio station (5) to the control and evaluation unit (3).

12. A safety system (1) in accordance with least one of the preceding claims, **characterized in that** the radio location system (4) is an ultra wideband radio location system, with the frequency used being in the range from 3.1 GHz to 10.6 GHz, with the transmission energy amounting to a maximum of 0.5 mW per radio station (5).

13. A safety system (1) in accordance with at least one of the preceding claims, **characterized in that** a change of the safety function of the safety system (1) takes place by means of the control and evaluation unit (3) based on the checked position data.

14. A safety system (1) in accordance with at least one of the preceding claims, **characterized in that** position data checked by means of the control and evaluation unit (3) are checked for agreement with stored position data of a safe point of interest and if there is agreement, a change of the safety function of the safety system (1) takes place.

15. A safety system (1) in accordance with at least one of the preceding claims, **characterized in that** the safety system (1) has a map or a map model, with the at least one safe point of interest being entered in the map or in the map model and a navigation of the movable machine taking place in the map or in the map model.

16. A method of localizing at least one object (2) having a control and evaluation unit (3), having at least one radio location system (4), wherein the radio location system (4) has at least three arranged radio stations (5);
wherein at least one radio transponder (6) is arranged at the object (2); wherein position data of the object (2) are determined by means of the radio location system (4);
wherein the position data are transmitted from the radio stations (5) of the radio location system (4) to the control and evaluation unit (3), wherein
at least three radio transponders (6) are arranged at the object (2), with all three radio transponders (6) each being arranged spaced apart from one another and with the three radio transponders (6) forming different points of a plane and defining the plane unambiguously in space; with the control and evaluation unit (3) comparing the position data of the radio transponders (6) and forming checked position data of the object (2); and
wherein the control and evaluation unit (3) forms orientation data of the object (2) from the position data of the radio transponders (6), **characterized in that** an actuator (11) is configured to cyclically vary the distances between the radio transponders (6).

## Revendications

1. Système de sécurité (1) pour localiser au moins un objet (2), avec une unité de commande et d'évaluation (3), avec au moins un système de radiolocalisation (4), dans lequel
le système de radiolocalisation (4) comporte au moins trois stations radio (5) disposées,
au moins un transpondeur radio (6) est disposé sur l'objet (2),
des données de position de l'objet (2) peuvent être déterminées au moyen du système de radiolocalisation (4),
les données de position peuvent être transmises des stations radio (5) du système de radiolocalisation (4) à l'unité de commande et d'évaluation (3), au moins trois transpondeurs radio (6) sont disposés sur l'objet (2), tous les trois transpondeurs radio (6) étant respectivement disposés à distance les uns des autres, et les trois transpondeurs radio (6) formant différents points d'un plan et définissant clairement le plan dans l'espace,
l'unité de commande et d'évaluation (3) est réalisée pour comparer les données de position des transpondeurs radio (6) et pour former des données de position vérifiées de l'objet (2),
l'unité de commande et d'évaluation (3) est réalisée pour former des données d'orientation de l'objet (2) à partir des données de position des transpondeurs radio (6),
**caractérisé en ce qu'**un actionneur (11) est réalisé pour modifier de manière cyclique les distances entre les transpondeurs radio (6).

2. Système de sécurité (1) selon l'une au moins des revendications précédentes, **caractérisé en ce que** l'objet (2) est un objet mobile (7), une machine mobile (8) ou une personne (9).

3. Système de sécurité (1) selon l'une au moins des revendications précédentes, **caractérisé en ce que** les distances entre les transpondeurs radio (6) sont connues de l'unité de commande et d'évaluation (3).

4. Système de sécurité (1) selon l'une au moins des revendications précédentes, **caractérisé en ce que** les distances entre les transpondeurs radio (6) sont mémorisées dans une mémoire (10) de l'unité de commande et d'évaluation (3).

5. Système de sécurité (1) selon l'une au moins des revendications précédentes, **caractérisé en ce que** les stations radio (5) pointent chacune dans des directions différentes.

6. Système de sécurité (1) selon l'une au moins des revendications précédentes, **caractérisé en ce que** les directions des stations radio (5) peuvent être modifiées de manière cyclique par des actionneurs (11).

7. Système de sécurité (1) selon l'une au moins des revendications précédentes, **caractérisé en ce que** l'unité de commande et d'évaluation (3) est réalisée pour déterminer une position respective des transpondeurs radio (6) à différents moments et pour en définir une vitesse, une accélération et/ou une direction de mouvement des transpondeurs radio (6).

8. Système de sécurité (1) selon l'une au moins des revendications précédentes, **caractérisé en ce que** les transpondeurs radio (6) présentent des horloges, les stations radio (5) présentant également des horloges, les stations radio (5) étant réalisées pour lire et décrire les heures des horloges des transpondeurs radio (6), et les stations radio (5) étant réalisées pour synchroniser les heures des transpondeurs radio (6), et les stations radio (5) étant réalisées pour comparer les heures des transpondeurs radio (6) avec les heures des stations radio (5).

9. Système de sécurité (1) selon l'une au moins des revendications précédentes, **caractérisé en ce qu'**au moins quatre, au moins six ou au moins huit transpondeurs radio (6) sont disposés sur l'objet (2), deux transpondeurs radio (6) respectifs se trouvant sur une droite respective, les droites étant respectivement perpendiculaires entre elles.

10. Système de sécurité (1) selon l'une au moins des revendications précédentes, **caractérisé en ce qu'**une machine mobile (7) présente un encodeur détectant un mouvement de la machine mobile (7), l'encodeur étant connecté à l'unité de commande et d'évaluation (3), et l'unité de commande et d'évaluation (3) étant réalisée pour évaluer l'information de mouvement des encodeurs.

11. Système de sécurité (1) selon l'une au moins des revendications précédentes, **caractérisé en ce que** des données de classification de l'objet (2) peuvent être déterminées au moyen du système de radiolocalisation (4), les données de classification pouvant être transmises de la station radio (5) à l'unité de commande et d'évaluation (3).

12. Système de sécurité (1) selon l'une au moins des revendications précédentes, **caractérisé en ce que** le système de radiolocalisation (4) est un système de radiolocalisation à bande ultralarge, la fréquence utilisée étant comprise dans la plage de 3,1 GHz à 10,6 GHz, l'énergie d'émission par station radio (5) étant de 0,5 mW au maximum.

13. Système de sécurité (1) selon l'une au moins des revendications précédentes, **caractérisé en ce que** sur la base des données de position vérifiées, une modification de la fonction de sécurité du système de sécurité (1) est effectuée au moyen de l'unité de commande et d'évaluation (3).

14. Système de sécurité (1) selon l'une au moins des revendications précédentes, **caractérisé en ce que** des données de position vérifiées au moyen de l'unité de commande et d'évaluation (3) sont vérifiées quant à leur conformité avec des données de position mémorisées d'un point de sécurité et, en cas de conformité, il se produit une modification de la fonction de sécurité du système de sécurité (1).

15. Système de sécurité (1) selon l'une au moins des revendications précédentes, **caractérisé en ce que** le système de sécurité (1) présente une carte ou un modèle de carte, ledit au moins un point de sécurité étant enregistré dans la carte ou dans le modèle de carte, et une navigation de la machine mobile étant effectuée dans la carte ou le modèle de carte.

16. Procédé de localisation d'au moins un objet (2), avec une unité de commande et d'évaluation (3), avec au moins un système de radiolocalisation (4), dans lequel
le système de radiolocalisation (4) présente au moins trois stations radio (5) disposées,
au moins un transpondeur radio (6) est disposé sur l'objet (2),
des données de position de l'objet (2) sont déterminées au moyen du système de radiolocalisation (4),
les données de position sont transmises des stations radio (5) du système de radiolocalisation (4) à l'unité de commande et d'évaluation (3),
au moins trois transpondeurs radio (6) sont disposés sur l'objet (2), tous les trois transpondeurs radio (6) étant respectivement disposés à distance les uns des autres, et les trois transpondeurs radio (6) formant différents points d'un plan et définissant clairement le plan dans l'espace,
l'unité de commande et d'évaluation (3) compare les données de position des transpondeurs radio (6) et forme des données de position vérifiées de l'objet (2),
l'unité de commande et d'évaluation (3) forme des données d'orientation de l'objet (2) à partir des données de position des transpondeurs radio (6), **caractérisé en ce que**
un actionneur (11) est réalisé pour modifier de manière cyclique les distances entre les transpondeurs radio (6).
